# EUROPEAN PATENT APPLICATION

(11) **EP 4 137 254 A1**
(43) Date of publication of application: **22.02.2023**
(21) Application number: 21192364.4
(22) Date of filing: 20.08.2021
(51) Int. Cl.: B22F 10/00, B22F 10/50, B22F 12/10, B22F 12/45, B22F 12/55, B22F 12/90, B33Y 10/00, B33Y 30/00, B33Y 50/02, B28B 1/00

(54) **METHOD AND APPARATUS FOR IN SITU DEBINDING AND SINTERING OF FILAMENT OR PASTE EXTRUSION ADDITIVE MANUFACTURED METAL OR CERAMIC PARTS**

(71) Applicant: Technische Universität Berlin, 10623 Berlin (DE)
(72) Inventor: Ortega Varela de Seijas, Manuel, 10713 Berlin (DE)
(74) Representative: Hertin und Partner Rechts- und Patentanwälte PartG mbB

(57) **Abstract**

The present invention relates to a method and an apparatus to locally debind and sinter three dimensional dense objects produced by additive manufacturing. The apparatus, therefore, comprises a build platform, at least one heater, an extruder, a monitoring unit and a control unit. In this regard, the extruder is configured to eject building material in layers onto the build platform to form a build part. The heater is configured to heat the build part locally and the monitoring unit is configured to capture data relating the build part. In addition, the control unit is configured to control the extruder and the heater such that a defined ejection point can be driven by the extruder and a defined heating zone and/or heating point can be targeted by the heater.

## Description

The invention relates to an apparatus for manufacturing a component by means of filament or paste extrusion additive manufacturing. The apparatus comprises a build platform, at least one heater, at least one extruder, a monitoring unit and a control unit. In this regard, the extruder is configured to eject building material in layers onto the build platform to form a build part. The heater is configured to heat the build part locally and the monitoring unit is configured to capture data relating the build part. In addition, the control unit is configured to control the extruder and the heater such that a defined ejection point can be driven by the extruder and a defined heating zone and/or heating point can be targeted by the heater.

Furthermore, the invention relates to a method and a use of the apparatus mentioned above for manufacturing a component by means of filament or paste extrusion additive manufacturing.

### Background of the invention

Additive Manufacturing (AM) is a growing field to produce high-performance functional parts for the aerospace, automobile, biomedical and energetic industries. However, the infancy of the technology today results in an early development stage with multiple parallel techniques being investigated. These can be classified mainly in powder, filament and resin based techniques.

The most common processes for metals, polymers and ceramics include Powder Bed Fusion (PBF), also known as Selective Laser Sintering (SLS) or Selective Laser Melting (SLM), which employs a laser or an electron beam to sinter or melt layers of a 2D sliced object repetitively on a powder bed, until completion of the part. Powder can also be blown into a molten pool, known as Direct Metal Deposition (DMD), where the powder is blown and fused together by means of a laser or an electron beam. On the other hand, Wire Arc Additive Manufacturing (WAAM) employs metal wires instead of powders to Additive Manufacturing large structures, and polymers are typically processed via stereo-lithography, photopolymerization or Fused Filament Fabrication (FFF).

Most additive manufacturing methods do not allow the combination of materials due to their inherent processing method (powder beds and resin basins).

Moreover, although Fused Filament Fabrication (FFF) allows the combination of limited materials, the process disadvantageously requires an uncoupled approach and expensive equipment. Monomaterial metallic or ceramic parts produced through Fused Filament Fabrication ought to be debinded and sintered on a subsequent step. This involves expensive and bulky equipment and is out of reach for most users. In addition, only materials with similar sintering and shrinkage behaviour can be combined in the prior art, limiting the application of this method to few multi-material parts.

### Problem addressed by the invention

In light of the prior art the technical problem addressed by the present invention is thus to provide a compact apparatus and a method which simplify the additive manufacturing of components by means of filament or paste extrusion additive manufacturing and, in particular, reduce the costs, while at the same time enabling a particularly precise and, as far as possible, defect-free and resistant manufacture of the component and time-minimized production, while also permitting the combination of different materials.

### Summary of the invention

This problem is solved by the features of the independent claims. Preferred embodiments of the present invention are provided by the dependent claims.

In a preferred embodiment the invention relates to an apparatus for manufacturing a component by means of filament or paste extrusion additive manufacturing characterized in that the apparatus comprises a build platform, at least one heater, at least one extruder, a monitoring unit, and a control unit
- wherein the extruder is configured to eject building material in layers onto the build platform to form a build part;
- wherein the heater is configured to heat the build part locally;
- wherein the monitoring unit is configured to capture data relating the build part;
- wherein the control unit is configured to control the extruder and the heater such that a defined ejection point can be driven by the extruder and a defined heating zone and/or heating point can be targeted by the heater.

The advantages of additive manufacturing are generally known. However, the invention aims to achieve an apparatus which, in particular, comprises all necessary equipment for producing a component by means of filament or paste extrusion additive manufacturing, so that a start-to-finish system is created without the component having to be moved from one machine (or apparatus) to another machine (or apparatus) for various manufacturing steps. Furthermore, the invention allows the production combining different materials, in particular materials that have different properties in terms of sintering and shrinkage.

Such an apparatus according to the invention is neither known nor obvious from the prior art. The combination of production steps and simultaneous automated monitoring advantageously means that certain parameters can be adjusted and optimized during production. In addition, production errors can be eliminated, particularly during the production process. Advantageously, the preferred apparatus enables fully automated production of components (without the manual interaction of a user). In addition, the local heating of a component to be produced allows the components to be designed in great detail. The buildup or production of the components in layers and the subsequent heating, preferably after each layer, leads to a very stable production of the components, since each layer is solidified individually.

The invention is much more than a turn away from the prior art. In fact, the technical innovation of the invention is to debind and sinter the produced build parts locally. Conventionally, green parts must be transported to bulky and expensive facilities, which requires human labor. The ability to debind and sinter locally significantly reduces manufacturing costs. Furthermore, it has been shown that several materials can be combined advantageously in a simple manner in prefabrication. In the prior art, this is only possible with considerable effort.

Since the heater preferably heats the build part only locally and creates a heating zone or heating point, other method steps can be executed simultaneously at other points or location on the build part during heating. It has been shown that simultaneous local heating of the build part on the one hand and extrusion of material onto the build part on the other hand at another location of the build part is possible, wherein the extrusion and heating do not affect each other.

For the purposes of the invention, additive manufacturing by means of filament or paste extrusion preferably means a manufacturing process from the field of 3D printing in which a workpiece or build part is built up layer by layer from a meltable (input) material. The meltable input material can be in the form of filaments or paste (for example embedded with metal or ceramic powders). Additive manufacturing by filament extrusion is known, for example, as fused filament fabrication or fused deposition modeling. Furthermore, additive manufacturing by paste extrusion, on the other hand, is known as PEM (Paste Extrusion Modeling), for example.

It is understood that both solid and hollow components and/or build parts can preferably be produced. However, the producible wall thicknesses for a hollow component and/or a hollow body are preferably at least 1 mm, further preferably at least 0.6 mm and in particular at least 0.2 mm. The aforementioned wall thicknesses enable extremely stable hollow parts. Especially, cracks in the component to be manufactured are already prevented with a wall thickness of at least 0.2 mm.

Preferably, the apparatus comprises a build platform, which forms a planar surface on which a component and/or build part can be manufactured. The build platform is preferably calibrated so that it preferably has a surface that is oriented horizontally over its entire expansion. Therefore, very accurate and detailed components can be produced on this build platform. The build platform is preferably also called as build plate, print bed, or build bed. Preferably, the build platform further comprises means for providing a particularly adhesive first layer of the building material to be applied. In this case, the build platform is for example very clean and has a material or agent on the surface that provides adhesion. Alternatively, the build platform may be preferably preheated for additional adhesion.

Further preferred is a heater that allows the build part to be heated to a temperature that can melt or ablate a building material such as plastic and/or sinter a building material such as metal and/or ceramic. Preferably, the heater is variable and allows temperatures to be adjusted over a wide range so that different materials (with different melting points) can be used within a component and/or build part. This makes it advantageous to use a building material that consists of two or more components with different material properties.

The heater preferably heats the build part locally. This preferably means that only the build part is partially heated, while the non-heated part is not or only slightly affected by the heat.

However, in a further preferred embodiment, the apparatus comprises a plurality of heaters, each heater being arranged to heat the component and/or the build part to a predefined temperature. For example, a heater may be arranged to sinter the component and/or the build part, while another heater is arranged to heat the component and/or the build part such that the binder is removed, for example by ablating. The temperatures that must be reached by the heaters in order to be able to deliver a defined heat (e.g. for sintering) depend on the building materials used.

According to the invention the extruder is configured to eject building material in layers onto the build platform to form a build part, wherein an extruder, on the other hand, is preferably a component that is set up to continuously press solid to viscous masses under pressure out of a shaping opening (also referred to as a nozzle, die or mouthpiece). In the context of the invention, the shaping opening is contained in an extruder end or extruder hot end or extruder head. Preferably, the building material is ejected by the extruder, which can also be ejected under the influence of heat. Furthermore, the extruder and/or the extruder head preferably comprises a heating element in addition to a nozzle.

Moreover, by combining multiple extruders and/or extruder heads, the apparatus allows to 3D print multi-material parts made of a combination of polymers or metal-ceramic composites.

In addition, the extruder can preferably apply dots/ points of material to a surface (e.g. build platform) along grids, the extruder being controlled by a preferred control unit. In this case, the dots/ points are created by liquefying a filament or paste-like plastic or wax material by heating, applying it by extruding or ejecting it through a nozzle, and then curing it by cooling it at the desired position in a grid of the surface or working plane. A component or a built part is usually built up by repeatedly passing through a working plane line by line and then "stacking" the working plane upwards so that a build part is created layer by layer. The layer thicknesses are substantially in particular in a range from 0.15 mm to 1.25 mm. However, embodiments comprising a layer thickness in a range of preferably 0.01 mm to 3 mm or 0.015 mm to 2 mm are also conceivable. The mentioned layer thicknesses enable excellent stability of a component. In particular, the layer thickness in a range between 0.15 mm to 1.25 mm enables excellent surface quality of the component to be manufactured. In the case of curves, a higher resolution is clearly noticeable. It is understood that the layer thickness depends on the minimum nozzle diameter of the extruder to ensure the flowability of the material. Furthermore, the layer thickness depends on the particle size of the powder, which is preferably in a range of 1 to 20 microns. The process is preferably repeated successively, layer after layer, until completion of the build part. A wide variety of materials can be extruded, with preferably thermoplastics, such as Acrylonitrile Butadiene Styrene (ABS), PolyLactic Acid (PLA), High-Impact Polystyrene (HIPS), Thermoplastic PolyUrethane (TPU), aliphatic PolyAmides (PA, also known as Nylon), and especially high performance plastics such as PolyEther Ether Ketone PEEK or PolyEtherimide (PEI). It is understood that the extruder is controlled via moving means by the control unit. The apparatus preferably comprises moving means suitable to move the extruder, in particular the extruder head, in all spatial directions

In another preferred embodiment highly-filled polymers (HF) with ceramic and metal powders can be printed through the extruder heads (extruder ends), resulting in almost fully dense build parts after a debinding and sintering process. Moreover, by combining multiple extruder heads (extruder ends), the apparatus allows to 3D print multi-material build parts made of a combination of polymers or metal-ceramic composites.

Terms such as "substantially", "approximately", "about", etc. preferably describe a tolerance range of less than ± 40%, preferably less than ± 20%, more preferably less than ± 10%, even more preferably less than ± 5% and in particular less than ± 1% and always include the exact value. "Similar" preferably describes quantities that are "approximately equal". "Partially" preferably describes at least 5%, more preferably at least 10%, and more preferably at least 20%, in some cases at least 40%.

In the preferred layer-by-layer model production, the individual layers thus join together to form a complex component and/or build part. Cantilevered components and/or build parts can preferably be produced with support structures. Alternatively, support structures are preferably created directly during production when building up the component and/or build part from the building material. However, building materials made of a polymer and additionally of metal and/or ceramics are particularly preferred, whereby the support structure (if required) is preferred manufactured directly during production - from the same production material.

In the sense of the invention, a monitoring unit is further preferably a unit comprising means for detecting an object to be monitored. The monitoring unit preferably comprises means for generating, processing, storing, transmitting, and receiving data. It is within the understanding of the invention that the monitoring unit comprises at least one sensor or sensor system. A sensor may detect physical (e.g., heat quantity, temperature, humidity, pressure, sound field quantities, brightness, acceleration) or chemical (e.g., pH, ionic strength, electrochemical potential, analytical methods such as spectral or microbiological) properties and/or the material composition of its environment qualitatively or quantitatively as a measurand. These quantities are detected by physical or chemical effects and converted into an electrical signal that can be further processed. In a preferred embodiment, the monitoring unit comprises a sensor selected from the group consisting of: Temperature sensor, Displacement sensor, Pressure sensor (force sensor), Acceleration sensor, Image sensor, Touch sensor, Humidity sensor, GPS sensor, NFC sensor, RFID sensor, Air quality sensor, Pyrometer, camera, ultrasonic receptor.

The sensors of the monitoring unit are set up to detect and/or analyze a build part or component to be manufactured, preferably automatically, wherein information is preferably obtained, selected from the group: material-related parameters, geometry-related parameters, environment-related parameters, condition-related parameters, operation-related parameters, apparatus-related parameters. The combination of all information preferably results in a comprehensive overall information, from which in particular very detailed knowledge about the component as well as the apparatus according to the invention is obtained.

A component (manufactured by means of filament or paste extrusion additive manufacturing) within the meaning of the invention is preferably to be understood as a completed or finished build part.

In another preferred embodiment, the feedstock used is a building material that is a solid-liquid mixture with a high solids content, e.g., a paste. The viscosity decreases with increasing heat. The building material can preferably assume several states. An initial paste-like state when extruded from an extruder, and a solid state after the paste has been extruded and possibly subjected to cooling or drying. Alternatively, the starting material can also consist of a solid building material, for example in the form of a filament. In this case, it is preferably heated and brought to a paste-like state and then ejected from the extruder.

In a further preferred embodiment, the control unit comprises a data processing unit and control means, as for example an actuator. The data processing unit preferably comprises means for generating, processing, storing, transmitting, and receiving data. The data processing unit is preferably in data communication with the control means and/or the monitoring unit, whereby data can be transmitted bidirectionally between these system components. In a preferred embodiment, the control means are arranged to control the heater and/or the extruder heads and/or the monitoring unit.

In a preferred embodiment, the data processing unit performs algorithms and calculations by receiving input data from the monitoring unit (e.g., sensors) and, after executing the algorithms, generates output data that is preferably transmitted to control means, e.g., an actuator. The advantage of such an arrangement is that the monitoring unit does not need to be equipped with components for data processing (processor) and data storage. Another advantage is that the data processing unit can include a variety of acquired data from different sensors for its analysis or the execution of the algorithms, so that a wide-ranging analysis is possible.

In a further preferred embodiment, the apparatus is characterized in that the building material comprises binding material and additionally metal and/or ceramics,
- wherein the metal and/or ceramics is preferably in the form of powder granules
- wherein the binder is preferably a polymeric mass.

By using metal-polymer or ceramic-polymer composite feedstocks, the advantages of two classes of materials can be combined in one component to be manufactured. Specifically for the present purpose, it is advantageous to use two material components, whereby on the one hand the binder is seen as an auxiliary material for the design purpose, while the metal or ceramic used provides the material for the component to be manufactured. The binder is preferably used to bind the metals and/or ceramics present while still in the form of granules and to impart its structural integrity to them in the course of component build up. The fact that the metal and/or ceramic is in the form of powder granules can advantageously ensure that this material is particularly uniformly contained in and surrounded by the binder.

In a preferred embodiment ceramics are preferably selected from the group consisting of: Silicon nitrate (Si3N4), Fused Silica (SiO2), Lead zirconium titanate, Zirconia, Yttria stabilized zirconia, Strontium ferrite (SrFe12O19), Alumina, Mullite + Alumina + MgO, Fused silica + MgO, or Fused silica + MgO.

In another preferred embodiment, metal or metallic alloys are preferably selected from the group consisting of: Stainless steel (17-4PH; 316L or AISI 630), Tungsten carbide-cobalt, Carbonyl iron, Titanium (Ti6AI4V), Chromoly steel 4140, Copper Kovar F-15, Nickel Inconel 625 and 718. Preferably, the metal powder can also consist of a combination of the above compounds.

However, it is possible to conduct the same process with materials that are not commercially available today. In particular, the same process is possible for precious alloys (e.g. gold, bronze, silver or platinum), which would be suitable for the luxury market (e.g. watch & jewellery industries). Any metallic or ceramic material that can be made into powder is suitable for the process. Even aluminum for the aerospace industy.

Furthermore, a powder (metal and/or ceramics) content of preferably 35% to 90%, more preferably 40% to 80% and in particular 55% - 70% is included in the feedstock. The percentages preferably refer to the (total) volume or the (total) mass of the feedstock. A range of 55 -70% powder volume loading is advantageous to ensure flowability of the feedstock material.

In another preferred embodiment a high powder volume/packing densities within the feedstock material are desired to decrease the shrinkage of the part after sintering whilst rendering high densities.

In a further preferred embodiment, a binder can be a polymeric mass or a mixture of a polymeric mass. The binder preferably consists of different types of polymers, waxes, and additives. Three main binder groups can preferably be distinguished:

| | |
|---|---|
| 1. Main binder: | Polymer mass which is preferably removed during the first debinding step. The main binder represents preferably between 50 and 90 vol % of the total binder. |
| 2. Backbone: | Component which preferably used to hold together the shape of the build part after the main binder is removed during the first debinding stage. The backbone is preferably thermally decomposed prior to sintering. The backbone preferably represents 0 to 50 vol % of the total binder system. |
| 3. Additives: | Dispersant agents, compatibilizers, and stabilizers which preferably help to disperse the filler particles (metal and/or ceramics) in the polymeric binder, preventing agglomeration and phase separation. Additives preferably represent between 0 to 10 vol % of the binder. |

The main binder preferably needs to present low viscosities (e.g. waxes) to be extruded through the extruder head and/or nozzle. One way to make the main binder flexible is preferably to further add elastomers or amorphous polyolefins. The majority of backbones are preferably polyolefins (e.g. polyethylene or polypropylene). Polyolefins are resistant to many solvents used during debinding, add strength to the debound part, and degrade into hydrocarbons only before sintering. Preferably, stearic acid is used as an additive, which facilitates the dispersion of the filler particles.

The main binders can preferably be thermally debinded from the green part by heating to 300-500 °C, for 3 to 8 hours. Heating to these temperatures is advantageously a slow process, so that the green compact is not damaged by uncontrolled decomposition and consequent cracking of the part. Careful selection of binder combinations has shown that higher heating rates and lower soak times can be used to thermally debind green compacts. An appropriate combination of binder system heating rates has shown that localized thermal debinding is possible via low intensity lasers or high intensity infrared emitters (infrared lamps).

Although time consuming and complex, removal of the main binder is necessary before sintering to avoid defects such as cracking, blistering, bloating, and the generation of large internal pores. Here, it has been shown that with laser ablation, the polymeric mass can be removed by focusing sufficient energy on the material (build part), which vaporizes the main binder mass. In-situ debinding is achieved by an application of local energy in a layer wise manner, leaving room for the escape of ablated polymers through the open pores, and thus avoiding the detrimental effects of having an increase in vapour pressure within the bulk.

In a further preferred embodiment, the apparatus is characterized in that the apparatus comprises a debinding heater and a sintering heater, wherein
(i) the debinding heater is a low intensity laser and/or an infrared lamp,
(ii) the sintering heater is a CO₂ Laser or a Nd:YAG Laser and/or an induction heater and/or a microwave heater
   wherein the debinding heater is configured to locally heat the build part to a temperature that causes the binding material to be removed from the build part, preferably causing a debinding layer in which the binding material of the last applied material layer is removed from the build part;
   wherein the sintering heater is configured to locally heat the build part to a temperature, after the binding material has been removed from the build part, that causes the metallic and/or ceramic powder granules to eventually be sintered, preferably causing the metallic and/or ceramic powder in the debinding layer to be sintered.

An advantage of microwaves, induction and laser sintering, in contrast to conventional sintering, is the ability to sinter in only a few seconds or minutes rather than hours or days. Low sintering times are possible with microwaves, induction and lasers since high heating rates are easily attained due to internal heating of the build part, as opposed to the external heating of conventional sintering

As always the last/newest layer to be applied is immediately debinded and sintered, little energy is required for the debinding heater and sintering heater, since the respective layer does not exceed a certain thickness. In addition, any defects that occur can be found and eliminated quickly, since the build part or component to be manufactured is not sintered or debinded as a whole, but layer by layer. Detailed component shapes are thus possible.

It is also possible in a further preferred embodiment, if required (with induction and microwave heating), to sinter a component to be manufactured in its entirety at the end of a process - i.e. after building material layer by layer. By using two types of heaters, debinding heater and sintering heater, an optimal heater can be used for both debinding and sintering applications. This promotes precision in production and also reduces the energy required to produce the component.

In a preferred embodiment, the debinding heater is a low intensity laser. Preferably, the low intensity laser is a 1W, continuous wave diode laser for debinding, with a wavelength of ~850 nm. The exact wavelength-power combination may depend on the binder selected. Advantageously, the low intensity laser consumes little energy, with the low intensity laser already generating enough heat to debind the build part locally. The low intensity laser needs to achieve an adequate temperature at the focal spot to ablate the main polymeric binder mass.

In a preferred embodiment, the debinding heater is an infrared lamp. The emitted infrared waves enter the build part only a few centimeters, preferentially heating it and thus causing debinding.

In a further preferred embodiment the apparatus is characterized in that the infrared lamp is aligned with the build part and is configured to irradiate the build part until the binding material is at least locally removed from the build part, preferably causing a debinding layer in which the binding material of the last applied material layer is removed from the build part. Infrared lamps are particularly suitable for this purpose, as they generate heat immediately. In addition, it is advantageous to produce a uniform heat, which, among other things, reduces the probability of defects in the build part or component to be manufactured.

In a further preferred embodiment the sintering heater is a CO₂ Laser or a Nd:YAG Laser. With laser sintering, depending on the laser power density, the powder granules preferably begin to melt and form a confined melt pool. The melted phase preferably formed between neighbouring close-packed particles initiate a capillary force that merge particles together. The melt pool forms preferably a rapid way for mass transport and liquid phase sintering.

However, when the laser beam irradiates the powder particles at a given wavelength, it scatters or reflects to a degree proportional to the reflectivity of the material, before it is absorbed. It has been shown both with simulations and experimentally that the heat formation (temperature) is inhomogeneous because of the randomness of the laser interactions. Consequently, lasers with different wavelengths and power densities ought to be selected to match the absorption characteristics of the corresponding powder granules. The laser power, hatch distance, scanning speed and laser beam diameter/spot size determine the laser power density. There are three types of laser sources that are preferably used for laser sintering:
1. Continuous wave (CW) CO₂ laser with a wavelength of ~10.6 µm: This type of laser is particularly suitable for processing materials with high absorption at far infrared or long wavelengths such as thermal curing polymers (PFTE, PMMA) and can also be absorbed by most ceramics and metals.
2. Continuous wave (CW) ytterbium fiber laser with a wavelength of ∼1.1 µm, which is preferably used for processing metals. The absorption of this laser wavelength is limited by some ceramics or polymers.
3. Nd:YAG laser with 1064 nm or 532 nm wavelengths. The energy of this preferably pulsed laser can be focused on a very small spot and is broadly used on laser welding applications of metal components, and is well suited for high melting temperature materials such as metals. It has been shown that Nd:YAG laser sintering of metal-ceramic composites can successfully process aluminum silicon carbide, titanium silicon carbide, titanium graphite, and multilayers of metal-ceramic composites.

The laser sintering process is preferably combined with an x-y mirror, or scan head/F-theta lens to shape the layer, and is preferably performed under a vacuum or neutral atmosphere such as argon or nitrogen, depending on the processed material.

The wavelength of a Nd:YAG laser, which is ten times shorter than that of CO₂ lasers, enables more precise focusing of the laser beam. This property makes the Nd:YAG laser ideal for manufacturing processes where the highest accuracy is required. In addition, high energies can be focused in pulsed mode, which increases the efficiency of the laser. In contrast, the CO₂ laser exhibits high process reliability due to its constant power and is also particularly economical with short operating times.

Furthermore, the integration of lasers advantageously opens up new possibilities for processing multi-material components, tailoring metallic microstructures, improving surface properties and thus increasing fatigue life, resulting in high-performance functional build parts or components.

In a preferred embodiment, the sintering heater is a microwave heater. In a microwave heater, high microwave fields are preferably generated (single-mode resonator). The heater preferably contains auxiliary materials which are also heated by the microwave (susceptors). The susceptors thereby preferably transfer the heat energy to the component like a conventional heater. The microwave field is controlled in such a way that the temperature difference is minimized. The sintering time is decisively reduced, and novel material properties can be achieved. Microwave sintering is preferably equally suitable for technical ceramics and hard metals.

In a preferred embodiment, the sintering heater is an induction heater. It is understood that induction heating is a process of heating an electrically conducting object (usually a metal) by electromagnetic induction, through heat generated in the object by eddy currents. By means of a coil, the induction heater preferably generates an alternating magnetic field through which low-frequency (preferably about 50-300 Hz), medium-frequency (preferably 200 Hz-10 kHz or 1 kHz-100 kHz]) or high-frequency alternating current flows, which induces eddy currents in the object (here: build part). The heat is generated directly in the object (here: build part) itself, so it does not need to be transferred by heat conduction. The electrical power comes preferably from special frequency converters or directly from the mains. Induction heating can pass through nonconductive materials, the environment is heated only indirectly. The process can be used under any gases or vacuum. The advantage of induction heating is a clean, energy-efficient and well-controllable melting process.

Induction heating is very suitable due to the packing density of the build part. Indirect induction heating can advantageously achieve build part densities of 99.79%. Induction heating is preferably combined with a crucible (e.g. graphite) and a ceramic shield (e.g. SiO2). Preferably, induction heating is used to heat graphite crucibles, which provides even better efficiency.

In a further preferred embodiment the apparatus is characterized in that the control unit is configured to focus, via control means, a laser beam of the low intensity laser and/or the CO₂ laser or the Nd:YAG laser onto the build part, the laser beams being capable of impacting the build part and causing a heating zone and/or a heating point in the build part;
- wherein the apparatus for focusing the laser beam of the low intensity laser comprises moving means suitable to move the low intensity laser in all spatial directions,
- wherein the apparatus for focusing the laser beam of the CO₂ laser or a Nd:YAG laser comprises a position-fixed laser scan head capable of aligning the laser beam of the laser CO₂ laser or a Nd:YAG laser with the build part.

As already described above, the apparatus according to the invention enables a fully automatic system which, in particular by the control unit and the control means, allows all necessary process steps for the production of a component manufactured by paste or filament extrusion additive manufacturing without human intervention. In particular, the alignment of the laser beams allows a very precise processing of the component, so that not only a heating zone but even a heating point can be generated.

In case of the low intensity laser, the control means preferably also include moving means, so that the low intensity laser can be moved in all spatial directions. Preferably, the low intensity laser can be mounted on a carriage rail system, which is movable in all spatial directions (x, y, z) via an actuator. Such a design allows the low intensity laser to be placed very close over the surface of the build part, so that only minimal energy is lost when the build part is irradiated. Preferably, the low intensity laser can follow the extruder head by its moving means so that immediately after ejecting the building material, the binder is removed.

The CO₂ laser or a Nd:YAG laser preferably comprises a stationary laser scan head. The laser scan head is particularly space-saving, since the laser source as such does not have to be moved in a spatial direction. In the scan head, the laser beam is preferably deflected, with the deflection angle being measured and (preferably) electronically controlled. A scan head can preferably have mirrors for deflecting the laser beam. This has the advantage that only a light mirror needs to be moved and the projection can thus be quickly realigned,

In a further preferred embodiment the apparatus is characterized in that the apparatus comprises a pulsed laser, wherein the build part is covered by a solid transparent confinement overlay. The pulsed laser is preferably used for plasticizing the near-surface zone of polycrystalline materials (e.g. metals) in order to increase the fatigue strength, among other things. The solid overlay confines the plasma shock explosion generated from the laser pulses, and plastifies the near surface zone of poly-crystalline metallic layers.

In a further preferred embodiment the apparatus is characterized in that the apparatus includes a monitoring system comprising an optical sensor, preferably a camera, a pyrometer and/or an ultrasonic receptor,
(i) wherein the optical sensor is aligned with the build part;
(ii) wherein the ultrasonic receptor is attached to the build platform;
(iii) wherein both the ultrasonic receptor and the optical sensor are controllable by the control unit.

Optical sensors have the advantage of being contactless and have a high measuring accuracy. They also offer the advantage that they cannot be disturbed by ferromagnetic substances or by electric or magnetic fields. In particular, pyrometers have the advantage that they allow very fast temperature measurement. Very large measuring ranges are possible (e.g. 350°C ... 3000°C) and the pyrometers are not subject to wear. Furthermore, there are no errors due to thermal contact and measurement is possible even at high voltages and electromagnetic fields. The presence of the above sensors, in particular a preferred IR camera and preferred ultrasonic receptors, when activated, allows the detection, localization and characterization of defects that occur during the sintering phase. It is understood that the sensors acquire data relating the build part, which are transmitted via an existing data link to the data processing unit of the control unit The control unit can use these data to evaluate and control the heaters or extruders contained in the apparatus, so that they perform an adapted operation step.

In a further preferred embodiment the apparatus is characterized in that the apparatus comprises a build chamber
- wherein the following components are arranged within the build chamber: the infrared lamp, the extruder comprising at least one extruder head, preferably two extruder heads, a camera, the low intensity laser, the build platform, an ultrasonic receptor,
- wherein the CO₂ Laser or a Nd:YAG Laser and/or the pulsed laser comprising a laser scan head are arranged outside the build chamber
- wherein the laser scan head is position-fixed and suitable to target the build part with a laser beam through an opening provided in the build chamber.

The build chamber protects the individual components from damage and exposure to foreign substances or particles such as dust. In addition, the build chamber provides sound insulation. The build chamber can further serve as a load-bearing element to which the individual components are attached and integrated, resulting in a compact apparatus. Preferably, according to the invention, all sensitive parts are housed inside the build chamber. By placing the CO₂ or Nd:YAG laser as such outside the build chamber, with the laser beam being guided into the build chamber via a scan head through an opening, very good accessibility is enabled, which simplifies the repair and maintenance of these lasers.

In addition, the build chamber advantageously allows to create a vacuum atmosphere and/or optionally add a neutral atmosphere, such as to prevent oxidation of metallic components during sintering (i.e., it is necessary to remove oxygen from the chamber to mitigate the effect of oxidation). In a preferred embodiment the invention relates to a method for manufacturing a component by means of filament or paste extrusion additive manufacturing comprising the following steps:
a providing a build platform, at least one heater, at least one extruder, a monitoring unit and a control unit
b. ejecting building material by the extruder in layers onto the build platform to form a build part;
c. heating the build part locally by the heater;
wherein the control unit controls the extruder and the heater such that a defined ejection point can be driven by the extruder and a defined heating zone and/or heating point can be targeted by the heater.

The combination of the proposed method steps leads to a surprising synergistic effect, which results in the advantageous properties and the associated overall success of the invention, with the individual features interacting with each other. A significant advantage of the method according to the invention is that extremely few process steps and system components are required, and yet an extremely robust and defect-resistant infrastructure is created for manufacturing a component using filament or paste extrusion additive manufacturing. The proposed method leads to an enormous reduction in the time required to manufacture a component, since on the one hand comprehensive aspects (e.g. relating to temperature, geometric shape, etc.) for the manufacture of a component are included simultaneously (with a monitoring unit) from the beginning, so that necessary changes and corrections during manufacture or afterwards are minimized. As a result of the fact that all influencing variables relevant to production are recorded, analyzed and post-processed, an optimized component (in terms of production and use) is advantageously obtained. Advantageously, the method can be automated in the apparatus according to the invention. As already explained, such a method in the context of an all-in-one system (all steps are carried out in one apparatus) is neither known nor proposed in the prior art.

The skilled person will recognize that the advantages, technical effects and preferred embodiments discussed in connection with the apparatus according to the invention apply analogously to the method according to the invention for producing a component by means of filament or paste extrusion additive manufacturing. Likewise, all advantages, technical effects and preferred embodiments described in connection with the method are transferable to the apparatus.

In a further preferred embodiment the method characterized in that the building material comprises binding material and additionally metal and/or ceramics,
- wherein the metal and/or ceramics is preferably in the form of powder granules
- wherein the binder is preferably a polymeric mass.

In a further preferred embodiment the method characterized in that two heaters are provided, namely a debinding heater and a sintering heater,
wherein
(i) the debinding heater is a low intensity laser and/or an infrared lamp,
(ii) the sintering heater is a CO₂ Laser or a Nd:YAG Laser and/or an induction heater and/or a microwave heater
   wherein the debinding heater heats the build part locally to a temperature that causes the binding material to be removed from the build part, preferably causing a debinding layer in which the binding material of the last applied material layer is removed from the build part;
   wherein subsequently the sintering heater heats the build part locally to a temperature, after the binding material has been removed from the build part, that causes the metallic and/or ceramic powder granules to eventually be sintered, preferably causing the metallic and/or ceramic powder in the debinding layer to be sintered.

In a further preferred embodiment, the method is characterized in that steps b. and c. are repeated until a final component is completely built up, wherein in step b. a single layer of the building material is applied and before applying a next layer the heater heats this layer locally in step c.
This repeated layer-by-layer processing of the component or build part advantageously results in extremely stable and, above all, dense component, whereby defects can be detected and immediately eliminated after each iteration.

In a further preferred embodiment, the method is characterized in that the component (or build part) is built up in layers and each layer is debinded individually. After the component (or build part) is completely built up and no longer contains any binder, it can preferably be completely sintered by means of induction heaters and/or microwave heaters. This has been shown to be advantageous for mono material metallic or ceramic components which are very stable and have few defects.

In a further preferred embodiment, the method is characterized in that
- the control unit focuses a laser beam, via control means, of the low intensity laser onto the build part, the laser beam being capable of impacting the build part and causing a heating zone and/or a heating point in the build part
   wherein the apparatus for focusing the laser beam of the low intensity laser comprises moving means suitable to move the low intensity laser in all spatial directions;
   and/or
- the control unit controls the induction heater by operating an induction coil and generating an alternating magnetic field that affects the build part
   wherein the induction coil is arranged in the apparatus so as to surround the build part.

In a further preferred embodiment, the method is characterized in that the control unit regulates or controls the induction heater, comprising induction coil, wherein in the interior of the induction coil, besides the build part, other elements are included, namely a graphite crucible and a SiO2 ceramic shield, for example. This allows even more efficient heating of the build parts. Preferably, other crucibles and ceramic shields are also possible, such as alumina, boron nitride, MgO, molybdenum crucibles, etc.

In another preferred embodiment, the control unit includes control means that control the induction and/or microwave heaters and regulate the combination of output voltage and current to achieve any desired heating profile for a particular material. In the case of induction heating, for example, it is necessary to control the heating rate by regulating the output current.

In a further preferred embodiment, the method is characterized in that the control unit focuses a laser beam, via control means, of the low intensity laser and/or the CO₂ laser or the Nd:YAG laser onto the build part, the laser beam being capable of impacting the build part and causing a heating zone and/or a heating point in the build part
wherein the apparatus for focusing the laser beam of the low intensity laser comprises moving means suitable to move the low intensity laser in all spatial directions;
wherein the apparatus for focusing the laser beam of the CO₂ laser or the Nd:YAG laser comprises a position-fixed laser scan head capable of aligning the laser beam of the laser CO₂ laser or a Nd:YAG laser with the build part.

In a further preferred embodiment, the method is characterized in that
the apparatus includes a monitoring system comprising an optical sensor, preferably a camera, and/or an ultrasonic receptor,
(i) wherein the optical sensor is aligned with the build part;
(ii) wherein the ultrasonic receptor is attached to the build platform;
(iii) wherein both the ultrasonic receptor and the optical sensor are controlled by the control unit.

In a further preferred embodiment, the invention relates to a use of the apparatus of the type mentioned above for manufacturing a component by means of filament or paste extrusion additive manufacturing.

### FIGURES

In the following, the invention is explained in more detail with reference to the figures, without being limited to them.

### Brief description of the figures

- **Figure 1**: schematic illustration of a preferred apparatus and method during a shaping phase
- **Figure 2**: schematic illustration of a preferred apparatus and method during a debinding phase
- **Figure 3**: schematic illustration of a preferred apparatus and method during a sintering phase
- **Figure 4**: schematic illustration of a preferred apparatus and method during a Laser Shock Peening (LSP) phase
- **Figure 5**: schematic illustration of a preferred apparatus and method during a further shaping phase
- **Figure** 6: schematic illustration of a preferred apparatus comprising an induction heater
- **Figure** 7: schematic illustration of a preferred apparatus comprising an induction heater, in particular a detailed view of a preferred induction coil

### Detailed description of the figures

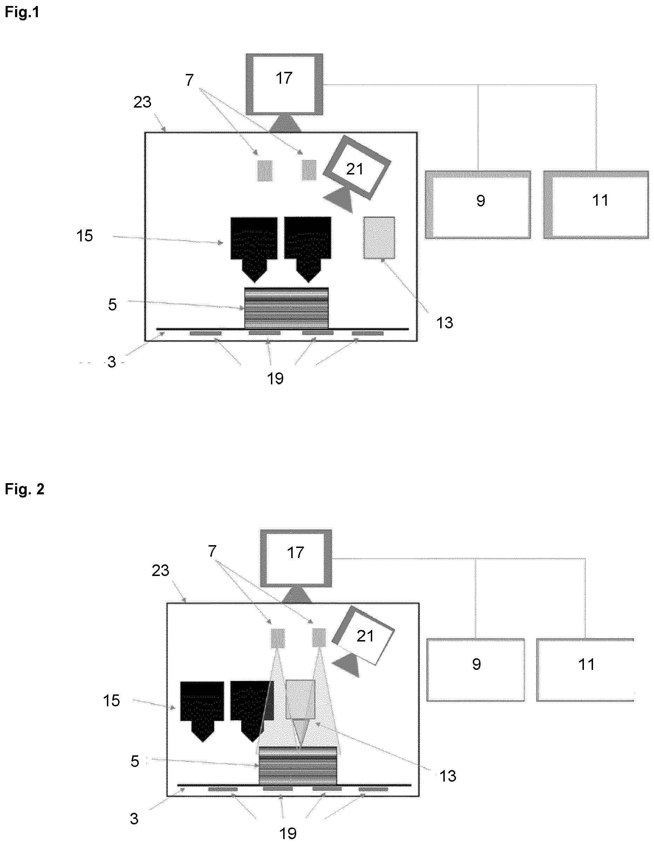

**Figure 1** shows a schematic illustration of a preferred apparatus **1** and method during a shaping phase. The apparatus **1** preferably comprises a build platform **3** and two extruder heads **15.** The extruder heads **15** preferably eject building material layer by layer onto the build platform **3** to form a build part **5.** The building material comprises preferably binding material and additionally metal and/or ceramics, wherein the metal and/or ceramics is preferably in the form of powder granules. The build part **5** comprising a binder is preferably called a green part. The use of a binder results in the build part **5** having a desired shape that is already essentially the same as the initial shape to be produced. In this context, it is important that the packing density is as homogeneous as possible and that the powder particles adhere firmly to each other. Furthermore, the apparatus **1** preferably comprises an optical sensor, in particular a camera **21,** wherein the optical sensor is aligned with the build part **5.** Accordingly, the camera **21** continuously captures data relating the build part **5,** which can be processed and analyzed by a control unit (not shown here). Moreover, the apparatus **1** comprises a low intensity laser **13,** two infrared lamps **7,** a CO₂ Laser or a Nd:YAG Laser **9,** a pulsed laser **11** and a laser scan head **17** as well as an ultrasonic receiver **19** attached to the build platform **3,** these components being inactive at the time of the shaping phase. Also, the apparatus **1** comprises a build chamber **23** in which the infrared lamps **7,** the extruder heads **15,** the camera **21,** the low intensity laser **13,** the build platform **3** and an ultrasonic receptor **19** are arranged. On the other hand, the CO₂ Laser or a Nd:YAG Laser **9** and/or the pulsed laser **11** and the laser scan head **17** are arranged outside the build chamber **23,** wherein the laser scan head **17** is position-fixed and suitable to target the build part **5** with a laser beam through an opening provided in the build chamber **23.**

**Figure 2** shows a schematic illustration of a preferred apparatus **1** and method during a debinding phase. The preferred embodiment of the apparatus **1** shown comprises all the components already mentioned in **figure 1** and enters the debinding phase using thermal debinding. The extruder heads **15** are preferably removed from the top of the build part **5** by moving them to an edge of the build chamber **23.** In contrast, the low intensity laser **13** is preferably moved over the build part **5** and then the surface of the build part **5** is preferably targeted by the low intensity laser **13.** The low intensity laser **13** preferably follows the extruded lines and heats the build part **5** locally. Since the low intensity laser **13** has a small size, it is preferably placed inside the build chamber **23,** as already discussed in the context of **figure 1****.** Alternatively or simultaneously, debinding can also be performed using the high-intensity infrared lamps **7.** Local heating with the low-intensity laser **13** and/or infrared lamps **7** removes the binder contained in the build part **5** (so-called green compact). The result of this debinding step is called the brown part, which consists of pure metal or ceramic particles and a residual binder (secondary binder or backbone).

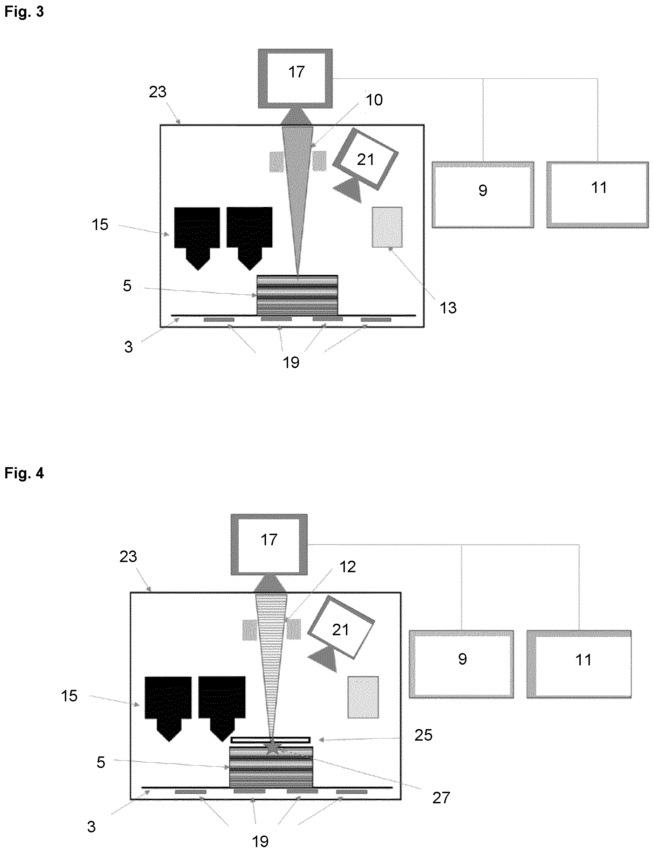

**Figure 3** shows a schematic illustration of a preferred apparatus **1** and method during a sintering phase. The preferred apparatus **1** further comprises the components already discussed in **figure 1** and **2****.** Preferably, the two extruder heads **15,** the low intensity laser **13** and the infrared lamps **7** are in a non-operating position and inactive. Further, the CO₂ Laser or a Nd:YAG Laser **9** scans the build part **5** using the laser scan head **17.** The laser scan head **17** is preferably fixed in position, with the laser beam emitting through an opening in the build chamber **23.** In addition, the laser scan head **17** comprises means which are configured for aligning the laser beam **10.** Preferably, the laser scan head **17** has actuators that can align the laser source about an axis of rotation, or the laser scan head **17** has a system of lenses that can align the laser beam **10** so that specific areas of the build part **5** can be selectively irradiated with the laser beam **10.** In this stage, the camera **21** is active, as well as the ultrasound receptors **19,** to record, locate and characterize any defects arising from the sintering stage. The CO₂ Laser or a Nd:YAG Laser **9** preferably scans the build part **5** again in the event of recorded defects.

**Figure 4** shows a schematic illustration of a preferred apparatus **1** and method during a Laser Shock Peening (LSP) phase. Also in the illustrated embodiment, the apparatus **1** comprises all the elements described above. Particularly preferably, a pulsed laser beam **12** is fired in the direction of the build part **5.** The pulsed laser beam **12** is preferably emitted by the laser scan head **17.** In the vicinity of the surface of the build part **5,** there is placed a solid transpararent confinement overlay **25.** The solid overlay **25** confines a plasma shock explosion **27** generated from the laser pulses, and plastifies the near surface zone of poly-crystalline metallic layers.

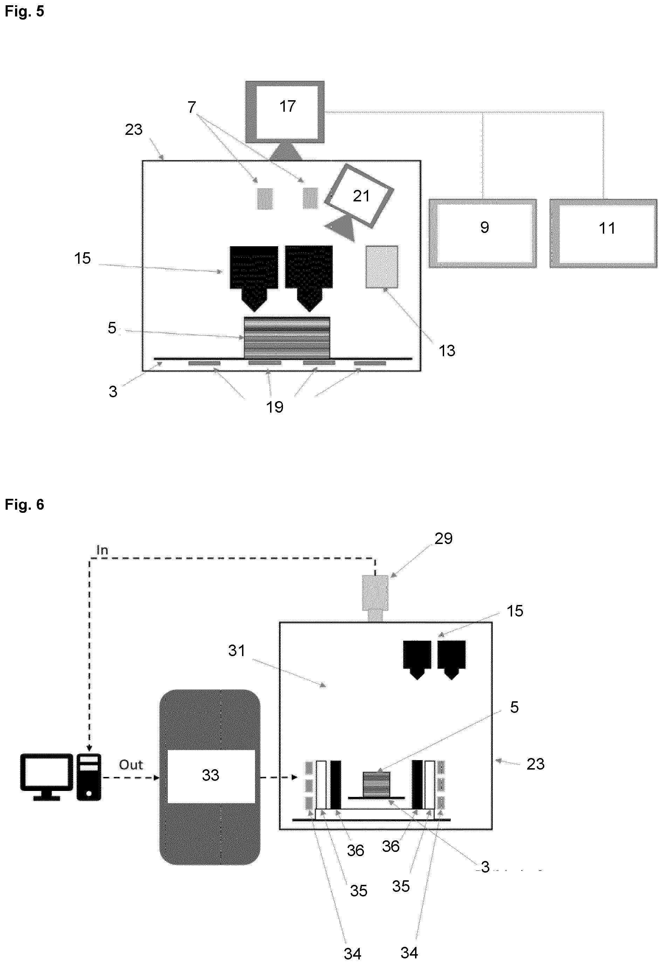

**Figure 5** shows a schematic illustration of a preferred apparatus **1** and method during a further shaping phase. Preferably the apparatus **1** enters back to the shaping phase (see also **figure 1****)** and the process is repeated.

**Figure 6** shows a preferred embodiment of the present apparatus **1.** The apparatus **1** preferably comprises a building platform **3** and two extruder heads **15** (preferably at least one extruder head **15),** wherein an extruder is preferably configured to eject building material in layers via the extruder head **15** onto the building platform **3** to form a build part **5.** Preferably, the building material comprises polymers as a binder and metal and/or ceramic, which are in the form of powder granules. Furthermore, the preferred apparatus **1** comprises an induction heater **33** for locally debinding the binder from the build part **5** and/or for sintering the metal and/or ceramic after the binder has been removed. The induction heater **33** comprises an induction coil **34.** In particular, the build part **5** is placed in the induction coil **34.** Preferably, a SiO2 ceramic shield **35** and a graphite crucible **36** are disposed between the build part **5** and the induction coil **34.** Furthermore, the preferred apparatus **1** comprises a data processing unit and means for controlling the extruder heads **15,** the induction heater **33** and a pyrometer **29.** The pyrometer **29** is preferably used for monitoring the heating process. The acquired data from the pyrometer **29** is preferably transmitted to the data processing unit via a data link, wherein the data processing unit can evaluate the acquired data and transmit adapted commands to the extruder heads **15** and/or to the induction heater **33** based thereon. Furthermore, the preferred apparatus comprises a build chamber **23.**

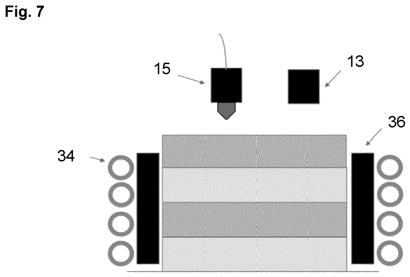

**Figure 7** shows a preferred apparatus **1,** in particular a detailed view of a preferred induction coil **34,** in the interior of which a build part **5** is arranged. The induction coil **34** and the build part **5** are shown in a sectional view. A graphite crucible **36** is also located between the induction coil **34** and the build part **5.** Furthermore, the preferred apparatus **1** includes an extruder head **15** that ejects building material in layers to form the build part **5.** The ejected layers are then directly heated by a low intensity laser **13** so that the build part **5** is locally debinded. Subsequently, the induction coil **34** can heat the debinded sections so that they are sintered.

### LIST OF REFERENCE SIGNS

- 1: apparatus
- 3: build platform
- 5: build part
- 7: infrared lamp
- 9: CO₂ Laser or Nd:YAG Laser
- 10: sintering laser beam
- 11: pulsed laser
- 12: LSP laser beam
- 13: low intensity laser
- 15: extruder head
- 17: laser scan head
- 19: ultrasonic receptor
- 21: camera
- 23: build chamber
- 25: solid transparent confinement overlay
- 27: plasma explosion
- 29: pyrometer
- 31: Vacuum/neutral (H2, N2, Ar)
- 33: Induction heater
- 34: Induction coil
- 35: SiO₂ ceramic shield
- 36: Graphite crucible

## Claims

1. An apparatus (1) for manufacturing a component by means of filament or paste extrusion additive manufacturing
**characterized in that**
the apparatus (1) comprises a build platform (3), at least one heater, an extruder, a monitoring unit and a control unit
- wherein the extruder is configured to eject building material in layers onto the build platform (3) to form a build part (5);
- wherein the heater is configured to heat the build part (5) locally;
- wherein the monitoring unit is configured to capture data relating the build part (5);
- wherein the control unit is configured to control the extruder and the heater such that a defined ejection point can be driven by the extruder and a defined heating zone and/or heating point can be targeted by the heater.

2. The apparatus (1) according to claim 1
**characterized in that**
the building material comprises binding material and additionally metal and/or ceramics,
- wherein the metal and/or ceramics is preferably in the form of powder granules
- wherein the binder is preferably a polymeric mass.

3. The apparatus (1) according to claim 2
**characterized in that**
the apparatus (1) comprises a debinding heater and a sintering heater, wherein
(i) the debinding heater is a low intensity laser (13) and/or an infrared lamp (7),
(ii) the sintering heater is a CO₂ Laser or a Nd:YAG Laser (9) and/or an induction heater (33) and/or a microwave heater
wherein the debinding heater is configured to locally heat the build part (5) to a temperature that causes the binding material to be removed from the build part (5), preferably causing a debinding layer in which the binding material of the last applied material layer is removed from the build part (5);
wherein the sintering heater is configured to locally heat the build part (5) to a temperature, after the binding material has been removed from the build part (5), that causes the metallic and/or ceramic powder granules to eventually be sintered, preferably causing the metallic and/or ceramic powder in the debinding layer to be sintered.

4. The apparatus (1) according to claim 3
**characterized in that**
the control unit is configured to focus, via control means, a laser beam of the low intensity laser (13) and/or the CO₂ laser or the Nd:YAG laser (9) onto the build part (5), the laser beams being capable of impacting the build part (5) and causing a heating zone and/or a heating point in the build part (5)
wherein the apparatus (1) for focusing the laser beam of the low intensity laser (13) comprises moving means suitable to move the low intensity laser (13) in all spatial directions;
wherein the apparatus (1) for focusing the laser beam of the CO₂ laser or a Nd:YAG laser (9) comprises a position-fixed laser scan head (17) capable of aligning the laser beam of the laser CO₂ laser or a Nd:YAG laser (9) with the build part (5).

5. The apparatus (1) according to any one of the preceding claims 1 - 4
**characterized in that**
the apparatus (1) comprises a pulsed laser (11), wherein the build part (5) is covered by a solid transparent confinement overlay (25).

6. The apparatus (1) according to any one of the preceding claims 1 - 5
**characterized in that**
the apparatus (1) includes a monitoring system comprising an optical sensor, preferably a camera (21), a pyrometer (29) and/or an ultrasonic receptor (19),
(i) wherein the optical sensor is aligned with the build part (5);
(ii) wherein the ultrasonic receptor (19) is attached to the build platform (3);
(iii) wherein both the ultrasonic receptor (19) and the optical sensor are controllable by the control unit.

7. The apparatus (1) according to any one of the preceding claims 3 - 5
**characterized in that**
the infrared lamp (7) is aligned with the build part (5) and is configured to irradiate the build part (5) until the binding material is at least locally removed from the build part (5), preferably causing a debinding layer in which the binding material of the last applied material layer is removed from the build part (5).

8. The apparatus according to claims 7
**characterized in that**
the apparatus (1) comprises a build chamber (23)
- wherein the following components are arranged within the build chamber (23): the infrared lamp (7), the extruder comprising at least one extruder head (15), preferably two extruder heads (15), a camera (21), the low intensity laser (13), the build platform (3), an ultrasonic receptor (19),
- wherein the CO₂ Laser or a Nd:YAG Laser (9) and/or the pulsed laser comprising a laser scan head (17) are arranged outside the build chamber (23)
- wherein the laser scan head (17) is position-fixed and suitable to target the build part (5) with a laser beam through an opening provided in the build chamber (23).

9. A method for manufacturing a component by means of filament or paste extrusion additive manufacturing
comprising the following steps:
a providing a build platform (3), at least one heater, an extruder, a monitoring unit and a control unit
b. ejecting building material by the extruder in layers onto the build platform (3) to form a build part (5);
c. heating the build part (5) locally by the heater;
wherein the control unit controls the extruder and the heater such that a defined ejection point can be driven by the extruder and a defined heating zone and/or heating point can be targeted by the heater.

10. The method according to claim 9
**characterized in that**
the building material comprises binding material and additionally metal and/or ceramics,
- wherein the metal and/or ceramics is preferably in the form of powder granules
- wherein the binder is preferably a polymeric mass.

11. The method according to claim 10
**characterized in that**
two heaters are provided, namely a debinding heater and a sintering heater, wherein
(i) the debinding heater is a low intensity laser (13) and/or an infrared lamp (7),
(ii) the sintering heater is a CO₂ Laser or a Nd:YAG Laser (9) and/or an induction heater (33) and/or a microwave heater
wherein the debinding heater heats the build part (5) locally to a temperature that causes the binding material to be removed from the build part (5), preferably causing a debinding layer in which the binding material of the last applied material layer is removed from the build part (5);
wherein subsequently the sintering heater heats the build part (5) locally to a temperature, after the binding material has been removed from the build part (5), that causes the metallic and/or ceramic powder granules to eventually be sintered, preferably causing the metallic and/or ceramic powder in the debinding layer to be sintered.

12. The method according to any one of the preceding claim 9 - 11
**characterized in that**
steps b. and c. are repeated until a final component is completely built up, wherein in step b. a single layer of the building material is applied and before applying a next layer the heater heats this layer locally in step c.

13. The method according to claim 11
**characterized in that**
- the control unit focuses a laser beam, via control means, of the low intensity laser (13) onto the build part (5), the laser beam being capable of impacting the build part (5) and causing a heating zone and/or a heating point in the build part (5) wherein the apparatus (1) for focusing the laser beam of the low intensity laser (13) comprises moving means suitable to move the low intensity laser (13) in all spatial directions;
and/or
- the control unit controls the induction heater (33) by operating an induction coil (34) and generating an alternating magnetic field that affects the build part (5)
wherein the induction coil (34) is arranged in the apparatus (1) so as to surround the build part (5).

14. The method according to any one of the preceding claim 9 - 13
**characterized in that**
the apparatus (1) includes a monitoring system comprising an optical sensor, preferably a camera (21), a pyrometer (29), and/or an ultrasonic receptor (19),
(i) wherein the optical sensor is aligned with the build part (5);
(ii) wherein the ultrasonic receptor (19) is attached to the build platform (3);
(iii) wherein both the ultrasonic receptor (19) and the optical sensor are controlled by the control unit.

15. Use of the apparatus to any one of the preceding claims 1 - 8 manufacturing a component by means of filament or paste extrusion additive manufacturing.
